# EUROPEAN PATENT SPECIFICATION

(11) **EP 4 063 780 B1**
(45) Date of publication and mention of the grant of the patent: **08.11.2023**
(21) Application number: 21210998.7
(22) Date of filing: 29.11.2021
(51) Int. Cl.: F28F 27/02

(54) **DEVICE ARRANGEMENT FOR ACCUMULATING EXCESS HEAT IN A NATURAL WATER-PERMEABLE LAYER AND FOR ITS RECOVERY**
VORRICHTUNG ZUR ÜBERSCHUSSWÄRME-SPEICHERUNG UND -RÜCKGEWINNUNG IN EINER NATÜRLICHEN WASSERDURCHLÄSSIGEN SCHICHT
APPAREIL POUR LE STOCKAGE ET LA RÉCUPÉRATION DE CHALEUR RÉSIDUELLE DANS UNE COUCHE NATURELLE D'EAU

(30) Priority: 24.03.2021 PL 43738821
(43) Date of publication of application: 28.09.2022
(73) Proprietor: Akademia Gorniczo-Hutnicza im. Stanislawa Staszica w Krakowie, 30-059 Kraków (PL)
(72) Inventor: Solecki, Marek, 30-698 Kraków (PL); Solecki, Tadeusz, 30-638 Kraków (PL); Stopa, Jerzy, 31-235 Kraków (PL); Wisniowski, Rafal, 30-698 Kraków (PL); Hajto, Marek, 30-838 Kraków (PL); Smulski, Rafal, 30-054 Kraków (PL)
(74) Representative: Wlasienko, Jozef

(56) References cited:
- CH-A5- 594 795
- DE-A1- 2 657 244
- DE-A1- 3 232 268
- FR-A2- 2 504 099
- US-A- 4 399 656

## Description

The subject of the invention is a device arrangement for accumulating excess heat in a natural water-permeable layer and for its recovery, applicable in the underground storage of excess heat, especially in its efficient use.

There are known and used methods and instalations for underground heat storage. For example, in Korean patent application KR101670007 B1 and in the book of J. Chodury entitled "Instalacje s 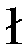 oneczne. Dobór, montaż i nowe konstrukcje kolektorów" (*Rynek Instalacyjny, Wyd.: Dom Wydawniczy MEDIUM, Warszawa, 2011*), typical methods of heat storage have been described, including i.a. water-gravel reservoirs and heat storage in aquifers. In the case of the water-gravel reservoirs, a mixture of water and gravel is used as a storage medium, located in a hole dug in the ground and thermally insulated from the surrounding ground and from the atmosphere by means of a plastic film. Hot water is drawn directly from the reservoir or through a coil arranged in the reservoir.

In the case of energy storage in the aquifers, heat is supplied to and collected from them through deep-wells equipped with filter sets, reaching to the aquifers, which have to be limited at the top and bottom with a layer of impermeable rocks.

In the publication of K. Kwestarz entitled "Magazynowanie ciep 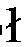 a - rodzaje magazynów" (Czysta Energia - 1212016), heat storages using natural aquifers for underground heat storage have also been described. Heat is stored in water as well as in the surrounding ground. Water-bearing layers with a preferred thickness of 20-50 meters may be sand, gravel, sandstone rocks and limestones. The best conditions are when the layer is placed between two impermeable layers and when there is little or no water flow. The simplest system of this type consists of two wells (two sets of wells) of different depth. In summer, water from one set is drawn and heated, e.g. by solar collectors using heat exchangers, and injected into the other set of wells. A thermal front is formed between them, which moves with increasing or decreasing temperature. During the heating period, water is drawn from the layer heated in summer and supplied to the exchangers, where it cools down, and then it is forced into the second set of wells without any contamination. For economic reasons and due to heat losses, the temperature of the injected water should not exceed 45°C. Heat pumps are used when a higher flow temperature of the receiver is required.

From Polish patent specification PL217289B1 a shallow geothermal installation system is known, where the subject of the invention is an underground water extraction and injection device, the underground water being used for heating and air conditioning, applicable when at least two wells are used, reaching respectively to the saturation zone of the aquifer, located between impermeable layers, cooperating with a heat pump.

In both wells, at lower ends of the circulation pipeline, pump units are installed, and above the wells, controllable valves are built into surface sections of the pipeline, to which drain pipelines are connected and introduced to both wells. The solution ensures easy and quick change of the well function from extraction to absorbent one and vice versa, through appropriate setting the controllable valves. In the summertime, the heat pump is used for air conditioning and cooling, and the recuperative heat from the heat pump is discharged with the water into the aquifer, where it is collected for use during the winter period. Depending on the season, the wells perform alternately the functions of extraction or discharge wells.

Japanese patent specification JP6325835B2, in turn, discloses a method of storing heat in a labyrinthine tank formed in the area of a water-permeable layer situated between impermeable layers. The tank is separated by contouring parts of the water-permeable layer with impermeable, vertical walls from the surface to a depth below the ceiling of the underlying impermeable layer and by providing a closed area inside the vertical, impermeable partitions forming a labyrinth-shaped channel, maximizing the length of a flow path between holes drilled from the surface: a discharge hole and an extraction hole, connected, by means of pumps, to a heat exchanger, to which air conditioning can be further connected. Water stored in a water-permeable layer also insulated from the surface can be used to heat rooms, and to cool them in summer. US 4,399,656 discloses : a device arrangement for accumulating excess heat in a natural water-permeable layer and for its recovery, comprising
- a heat storage filled with water, which constitutes a closed area, separated from the water-permeable layer by means of anti-filtration walls, being vertical or having slope close to vertical, and also comprising
- at least one extraction well situated in this area and a heat exchanger,
- at least one discharge well and at least one pump, wherein the anti-filtration walls are walls that constitute a thermally insulating partition, the extraction well and the discharge well are constitued by a dual-function extraction-discharge well equipped with a discharge pipeline and an extraction pipeline hydraulically connected to the pump directly or indirectly, and the heat storage is covered on top with a horizontal partition that constitutes an anti-filtration and thermally insulating cover.

The invention solves the technical problem of a method of storing heat in natural water-permeable layers - ATES (Aquifer Thermal Energy Storage), consisting in the inability to use it in water-permeable layers with low water accumulation or with significant water outflow from the area designated for the storage, while ensuring high efficiency and low thermal inertia.

The essence of the device arrangement for accumulating excess heat in a natural water-permeable layer and for its recovery, comprising a heat storage filled with water, which constitutes a closed area, separated from the water-permeable layer by means of anti-filtration walls, being vertical or having slope close to vertical, made of the ground surface to a depth below the floor of the water-permeable layer, and comprising at least one extraction well situated in this area and a heat exchanger, at least one discharge well and at least one pump, consists in that the anti-filtration walls are diaphragm walls that constitute a thermally insulating partition, wherein the extraction well and the discharge well are constitued by one dual-function extraction-discharge well equipped with a discharge pipeline and an extraction pipeline hydraulically connected to the pump directly or indirectly, wherein the pump is connected by means of an electric power cable to a frequency converter which has a signal connection to a checking, measuring and control equipment, which furthermore has a signal connection to multilevel temperature and water level measuring probes located in the extraction-discharge well and in at least one control and measurement hole, situated within the heat storage and in the heat exchanger. The checking, measuring and control equipment has a signal connection to controllable valves situated on hydraulic lines that connect an extraction collector to an extraction pipeline, and to controllable valves situated on hydraulic lines that connect a discharge collector to a discharge pipeline. The extraction and discharge collectors are led to the heat exchanger, and the heat storage is covered on top with a horizontal partition that constitutes an anti-filtration cover and thermal insulation.

It is preferable that the heat storage is additionally covered with a layer of soil lying on the horizontal partition, which allows to ensure the biological function on the surface, above the heat storage. It is preferable that between the established water level in the heat storage and the horizontal partition, there is a waterless space filled with soil air, that constitutes an additional thermal insulation.

It is also preferable that the pump is a pump or a pump set installed on a surface between the extraction collector and the heat exchanger.

It is furthermore preferable that the pump is a submersible pump, installed in place of a suction stainer, on the extraction pipeline.

It is preferable that the walls of the heat storage form a ring shape when they are projected on a horizontal plane.

Moreover, it is preferable that the arrangment comprises dual-function extraction-discharge wells arranged such that one well is situated in the middle of the heat storage, and the others are arranged evenly at a constant distance from the center, wherein in directions representing the bisector of an angle defined by the two adjacent extraction-discharge wells and the central extraction-discharge well, the control and measurement holes are located.

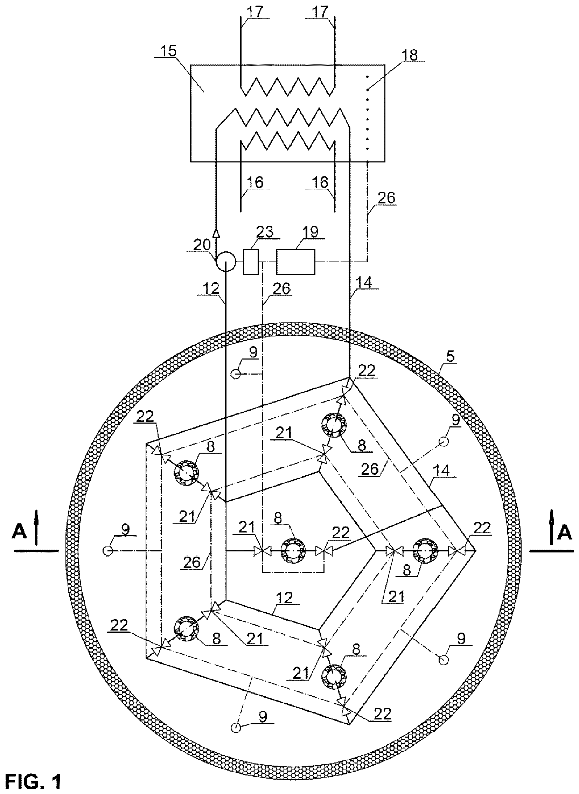

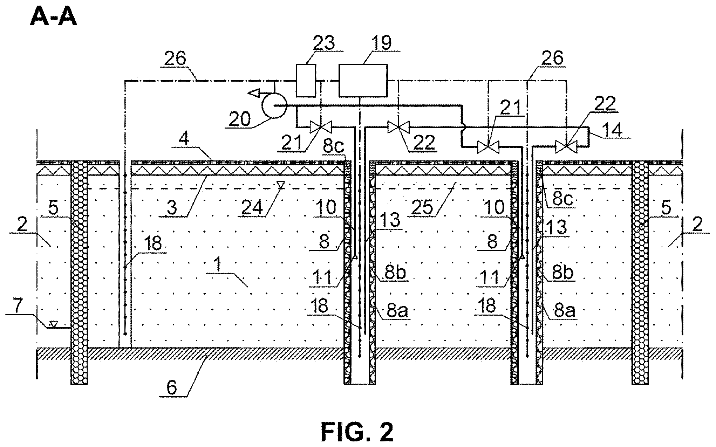

The subject of the invention in an exemplary embodiment is shown in the drawing in which Fig. 1 shows schematically a top view of an underground excess heat storage along with an installation diagram on the surface, and Fig. 2 shows schematically a vertical cross-section through the center of the underground excess heat storage separated in a natural water-permeable layer, along with an installation on the surface.

A device arrangement for accumulating excess heat in a natural water-permeable layer and for its recovery comprises an underground heat storage 1 made in a natural part of a water-permeable layer 2, covered with a horizontal partition 3 that constitutes a thermal and filtration insulation and a layer of soil 4 lying thereon. The natural water-permeable layer 2 is limited by a vertical anti-filtration wall 5 constituting a thermal and filtration insulation, forming a ring-shaped closed area having an inner radius of 52 m. The vertical wall 5 is recessed over a distance of 1 m into a natural impermeable layer 6, lying under the natural water-permeable layer 2. A water table level 24 in the heat storage 1 is above the natural underground water level 7 in the natural water-permeable layer 2. Inside the underground heat storage 1 there are six dual-function extraction-discharge wells 8 consisting of a filter pipe column 8a, around which a gravel pack 8b is provided, and in the near-surface section, a sealing 8c is provided above the gravel pack. The wells 8 are arranged such that one of them is situated in the center of the heat storage 1, and the others are arranged evenly at constant distances from the center; on a circle with a radius of 33 m. In directions representing the bisector of an angle defined by the two adjacent wells 8 located on the circle and the central well 8, at a distance of 45 m from the center, there are five control and measurement holes 9. In each dual-function extraction-discharge well 8 there is a vertical extraction pipeline 10, ended at the lower part with a suction stainer 11 with a check valve, submerged below the dynamic level of the water table 24 existing in that well, and the upper end of the extraction pipeline 10 is connected to an extraction collector 12 through a controllable valve 21. Furthermore, in each dual-function extraction-discharge well 8 there is a vertical discharge pipeline 13, the lower end of which is situated at the lower part of the underground heat storage 1, and the upper end is connected to a discharge collector 14 through a controllable valve 22. The extraction collector 12 and the discharge collector 14, made in the technology of pre-insulated pipes and located below the ground surface, are led to the heat exchanger 15, to which a heat supply installation 16 and a heat collection installation 17 are also connected. Between the cummulative extraction collector 12 and the heat exchanger 15 there is a set of hydraulic pumps 20 powered by a frequency converter 23 and connected to it by means of an electric wire. In each dual-function extraction-discharge well 8, in each control and measurement hole 9 and in the heat exchanger 15 there are multilevel temperature and water level measuring probes 18 connected by means of a signal wire 26 to a checking, measuring and control equipment 19, which in turn is connected, by means of the signal wire 26, to the frequency converter 23 and to the controllable valves 21 and 22. Between the established water level 24 in the heat storage 1 and the horizontal partition 3 there is a waterless space 25, filled with soil air, that constitutes an additional thermal insulation.

In order to better describe the invention in an exemplary embodiment, a method of its operation can be presented. By means of the multilevel measuring probes 18 transmitting readings to the checking, measuring and control equipment 19, the vertical temperature field distribution and the water table level 24 in the underground excess heat storage 1 as well as the temperature field distribution in the heat exchanger 15 are controlled. In case that the water table level 24 in the heat storage 1 needs to be raised, it is supplemented with a set of pumps (not shown in the drawing) from the area of the natural water-permeable layer 2 or from another water source. The extraction, discharge function or temporary exclusion of individual wells 8 is determined in each case on the basis of measurement data obtained from all the multilevel measuring probes 18. A dedicated software of the checking, measuring and control equipment 19 individually determines the operating mode of each well 8 in real time, depending on the temperature field distribution in the space of the heat storage 1. Circulating water flow rate in the vertical extraction pipeline 10, the extraction collector 12, the discharge pipeline 13, and the discharge collector 14 depends on the operation of the pump set 20, in which the rotational speed control is applied by means of the frequency converter 23, controlled by the checking, measuring and control equipment 19. The checking, measuring and control equipment 19 turns the pump set 20 on and off depending on the pressure in the cummulative discharge collector 14 and on the temperature value measured by the multilevelymi measuring probes 18, and also individually controls the controllable valves 21 and 22 that regulate hot water extraction in order to transfer heat through the heat exchanger 15 to the accumulated heat collection installation 17 or its discharge to the heat storage 1, after it has been collected in the heat exchanger 15 from the excess heat supply installation 16.

In another embodiment of the invention, the signal transmission between the measuring probes 18, the checking, measuring and control equipment 19, the pump set 20 and the frequency converter 23, as well as the controllable valves 21 regulating water extraction and the controllable valves 22 regulating water discharge, is performed wirelessly, by means of radio waves.

In yet another embodiment of the invention not shown in the drawing, the pumps 20 are submersible pumps, installed in each dual-function extraction-discharge well 8 in place of the suction stainer 11. The pumps 20 are elecrically powered and their operation is individually regulated by the checking, measuring and control equipment 19 using the frequency converter 23.

Explanation of refrence numbers in Fig. 1 and Fig. 2:
- (1): (heat) storage
- (2): natural water-permeable layer
- (3): horizontal partition
- (4): soil layer
- (5): anti-filtration wall
- (6): natural impermeable layer
- (7): natural water level
- (8): well
- (8a): filter pipe column
- (8b): gravel pack
- (8c): sealing
- (9): control and measurement hole
- (10): extraction pipeline
- (11): suction stainer
- (12): extraction collector
- (13): discharge pipeline
- (14): a discharge collector
- (15): heat exchanger
- (16): heat supply installation
- (17): heat collection installation
- (18): multilevel measuring probes
- (19): checking, measuring and control equipment
- (20): pump or pump set
- (21): controllable valve
- (22): controllable valve
- (23): frequency converter
- (24): water table level
- (25): waterless space
- (26): signal wire

## Claims

1. A device arrangement for accumulating excess heat in a natural water-permeable layer and for its recovery, comprising a heat storage filled with water, which constitutes a closed area, separated from the water-permeable layer by means of anti-filtration walls, being vertical or having slope close to vertical, made of the ground surface to a depth below the floor of the water-permeable layer, and also comprising at least one extraction well situated in this area and a heat exchanger, at least one discharge well and at least one pump, wherein the anti-filtration walls (5) are diaphragm walls that constitute a thermally insulating partition, the extraction well and the discharge well are constitued by a dual-function extraction-discharge well (8) equipped with a discharge pipeline (13) and an extraction pipeline (10) hydraulically connected to the pump (20) directly or indirectly, wherein the pump (20) is connected by means of an electric power cable to a frequency converter (23) which has a signal connection to a checking, measuring and control equipment (19), which furthermore has a signal connection to multilevel temperature and water level (24) measuring probes (18) located in the extraction-discharge well (8) and in at least one control and measurement hole (9) situated within the heat storage (1) and in the heat exchanger (15), and furthermore the checking, measuring and control equipment (19) has a signal connection to controllable valves (21) situated on hydraulic lines that connect an extraction collector (12) to an extraction pipeline (10), and to controllable valves (22) situated on hydraulic lines that connect a discharge collector (14) to a discharge pipeline (13), wherein the extraction (12) and discharge (14) collectors are led to the heat exchanger (15), and the heat storage (1) is covered on top with a horizontal partition (3) that constitutes an anti-filtration and thermally insulating cover.

2. The device arrangement according to claim 1, wherein the heat storage (1) is additionally covered with a layer of soil lying on the horizontal partition (3).

3. The device arrangement according to claim 1, wherein between the established water level (24) in the heat storage (1) and the horizontal partition (3), there is a waterless space (25) filled with soil air, that constitutes an additional thermal insulation.

4. The device arrangement according to claim 1, wherein the pump (20) is a pump or a pump set installed on a surface between the extraction collector (12) and the heat exchanger (15).

5. The device arrangement according to claim 1, wherein the pump (20) is a submersible pump installed in place of a suction stainer (11) on the vertical extraction pipeline (10).

6. The device arrangement according to claim 1, wherein the walls (5) of the heat storage (1) form a ring shape when they are projected on a horizontal plane.

7. The device arrangement according to claim 5, wherein it comprises dual-function extraction-discharge wells (8) arranged such that one well is situated in the middle of the heat storage (1), and the others are arranged evenly at a constant distance from the center, wherein in directions representing the bisector of an angle defined by the two adjacent extraction-discharge wells (8) and the central extraction-discharge well (8), the control and measurement holes (9) are located.

## Patentansprüche

1. Vorrichtungsanordnung zur Speicherung überschüssiger Wärme in einer natürlichen wasserdurchlässigen Schicht und zu deren Rückgewinnung, umfassend einen mit Wasser gefüllten Wärmespeicher, der einen geschlossenen, mithilfe der vertikalen oder nahezu vertikalen, sich von der Erdoberfläche bis in eine Tiefe unterhalb des Bodens der wasserdurchlässigen Schicht erstreckenden Antifiltrationswände, von der wasserdurchlässigen Schicht getrennten Bereich darstellt, und umfassend auch mindestens einen in diesem Bereich angeordneten Entnahmebrunnen und einen Wärmetauscher, mindestens einen Entleerungsbrunnen und mindestens eine Pumpe, wobei die Antifiltrationswände (5) Schlitzwände sind, die auch eine thermisch isolierende Trennwand darstellen, und als der Entnahmebrunnen sowie der Entleerungsbrunnen ein Doppelfunktions-Entnahme- und Entleerungsbrunnen (8) dient, der mit einer Entleerungsleitung (13) und einer hydraulisch direkt oder indirekt mit der Pumpe (20) verbundenen Entnahmeleitung (10) ausgestattet ist, und die Pumpe (20) über ein elektrisches Stromkabel mit Frequenzumrichter (23) verbunden ist, der mit einer Kontroll-, Mess- und Regeleinrichtung (19) eine Signalverbindung aufweist, die darüber hinaus eine Signalverbindung mit mehrstufigen Temperatur- (18) und Wasserstandsmesssonden (24) aufweist, die sich im Entnahme- und Entleerungsbrunnen (8) und in mindestens einer Kontroll- und Messbohrung (9) befinden, die innerhalb des Wärmespeichers (1) und im Wärmetauscher (15) angeordnet sind, und außerdem die Kontroll-, Mess- und Regeleinrichtung (19) eine Signalverbindung mit steuerbaren Ventilen (21) aufweist, die auf die einen Entnahmekollektor (12) mit einer Entnahmeleitung (10) verbindenden hydraulischen Leitungen angeordnet sind, sowie mit steuerbaren Ventilen (22), die auf die einem Entleerungskollektor (14) mit einer Entleerungsleitung (13) verbindenden hydraulischen Leitungen angeordnet sind, wobei die Entnahme- (12) und die Entleerungskollektor (14) zum Wärmetauscher (15) geführt sind, und der Wärmespeicher (1) von oben mit einer horizontalen Trennwand (3) abgedeckt ist, die eine filtrationshemmende und wärmeisolierende Abdeckung darstellt.

2. Vorrichtungsanordnung nach Anspruch 1, wobei der Wärmespeicher (1) zusätzlich mit einer auf der horizontalen Trennwand (3) liegenden Erdschicht bedeckt ist.

3. Vorrichtungsanordnung nach Anspruch 1, wobei zwischen dem eingestellten Wasserspiegel (24) im Wärmespeicher (1) und der horizontalen Trennwand (3) ein wasserloser, mit Bodenluft gefüllter Raum (25) vorhanden ist, der eine zusätzliche Wärmedämmung darstellt.

4. Vorrichtungsanordnung nach Anspruch 1, wobei die Pumpe (20) eine auf einer Fläche zwischen dem Entnahmekollektor (12) und dem Wärmetauscher (15) installierte Pumpe oder ein Pumpenaggregat ist.

5. Vorrichtungsanordnung nach Anspruch 1, wobei die Pumpe (20) eine Tiefbrunnenpumpe ist, die anstelle eines Saugkorbs (11) an der vertikalen Entnahmeleitung (10) installiert ist.

6. Vorrichtungsanordnung nach Anspruch 1, wobei die auf eine horizontale Ebene projizierten Wände (5) des Wärmespeichers (1) eine Ringform aufweisen.

7. Vorrichtungsanordnung nach Anspruch 5, wobei sie Doppelfunktions-Entnahme- und Entleerungsbrunnen (8) aufweist, die so angeordnet sind, dass einer in der Mitte des Wärmespeichers (1) liegt und die anderen gleichmäßig in einem konstanten Abstand von der Mitte aus angeordnet sind, wobei in Richtungen, die die Winkelhalbierende eines Winkels, der durch die beiden benachbarten Entnahme- und Entleerungsbrunnen (8) und den zentralen Entnahme- und Entleerungsbrunnen (8) definiert wird, darstellen, die Kontroll- und Messbohrungen (9) angeordnet sind.

## Revendications

1. Un système de dispositifs pour accumuler la chaleur excédentaire dans une couche naturelle perméable à l'eau et pour sa récupération, comprenant un accumulateur de chaleur rempli d'eau, qui constitue un espace clos, séparé de la couche perméable à l'eau au moyen de parois anti-filtration, étant vertical ou ayant une pente proche de la verticale, formé de la surface du sol jusqu'à une profondeur sous le plancher de la couche perméable à l'eau, et comprenant au moins un puits d'extraction situé dans cette zone et un échangeur de chaleur, au moins un puits de décharge et au moins une pompe, dans lequel les parois anti-filtration (5) sont des parois moulées constituant une cloison thermiquement isolante, le puits d'extraction et le puits de décharge sont constitués par un puits d'extraction-décharge (8) à double fonction équipé d'une canalisation de décharge (13) et une conduite d'extraction (10) reliée hydrauliquement à la pompe (20) directement ou indirectement, la pompe (20) est reliée au moyen d'un câble d'alimentation électrique à un convertisseur de fréquence (23) qui a une connexion de signal à un équipement de contrôle, de mesure et de réglage (19), qui a en outre une connexion de signal à des sondes de mesure multiniveaux de température (24) et de niveau d'eau (18) situées dans le puits d'extraction-décharge (8) et dans au moins un trou de contrôle et de mesure (9) situé à l'intérieur de l'accumulateur de chaleur (1) et dans l'échangeur de chaleur (15), et en outre l'équipement de contrôle, de mesure et de réglage (19) a une connexion de signal à des vannes contrôlables (21) situées sur des conduites hydrauliques qui relient un collecteur d'extraction (12) à une canalisation d'extraction (10), et à des vannes commandables (22) situées sur des conduites hydrauliques reliant un collecteur de décharge (14) à une canalisation de décharge (13), les collecteurs d'extraction (12) et de décharge (14) étant conduit à l'échangeur de chaleur (15), et l'accumulateur de chaleur (1) est recouvert par le dessus d'une cloison horizontale (3) qui constitue une couverture anti-filtration et thermiquement isolante.

2. Système de dispositifs selon la revendication 1, dans lequel l'accumulateur de chaleur (1) est en outre recouvert d'une couche de terre reposant sur la cloison horizontale (3).

3. Système de dispositifs selon la revendication 1, dans lequel entre le niveau d'eau établi (24) dans l'accumulateur de chaleur (1) et la cloison horizontale (3), il y a un espace sans eau (25) rempli d'air du sol, qui constitue un isolation thermique supplémentaire.

4. Système de dispositifs selon la revendication 1, dans lequel la pompe (20) est une pompe ou un système de pompes installé sur une surface entre le collecteur d'extraction (12) et l'échangeur de chaleur (15).

5. Système de dispositifs selon la revendication 1, dans lequel la pompe (20) est une pompe de forage installée à la place de la crépine d'aspiration (11) sur la canalisation d'extraction verticale (10).

6. Système de dispositifs selon la revendication 1, dans lequel les parois (5) de l'accumulateur de chaleur (1) forment une forme d'anneau lorsqu'elles sont projetées sur un plan horizontal.

7. Système de dispositifs selon la revendication 5, dans lequel il comprend des puits (8) à double fonction d'extraction-décharge disposés de sorte que l'un est situé au milieu de l'accumulateur de chaleur (1), et les autres sont disposés régulièrement à distance constante à partir du centre, dans lequel dans des directions représentant la bissectrice d'un angle défini par les deux puits d'extraction-décharge adjacents (8) et le puits d'extraction-décharge central (8), les trous de contrôle et de mesure (9) sont situés.
